# EUROPÄISCHE PATENTANMELDUNG

(11) **EP 2 093 435 A2**
(43) Veröffentlichungstag der Anmeldung: **26.08.2009**
(21) Anmeldenummer: 09405032.5
(22) Anmeldetag: 19.02.2009
(51) Int. Cl.: F16B 19/00

(54) **Undurchlässige Nietenverbindung**

(30) Priorität: 22.02.2008 CH 2632008
(71) Anmelder: Rogantini, Luca, 7608 Castasegna (CH)
(72) Erfinder: Rogantini, Luca, 7608 Castasegna (CH)
(74) Vertreter: Fiammenghi-Domenighetti, Delfina

(57) **Zusammenfassung**

Undurchlässige Nietenverbindung 1 zum Befestigen von einem oder mehreren Elementen 2, 3 durch eine Öffnung 4, wobei die Undurchlässigkeit durch ein zwischen dem verformten Kopf C des Niets Ri und der Öffnung 4 angeordnetes Element gewährleistet ist.

## Beschreibung

Die vorliegende Erfindung betrifft den technischen Bereich der Befestigung von Elementen.

Die vorliegende Erfindung betrifft eine undurchlässige Nietenverbindung für die Befestigung von einem oder mehreren Elementen, wie im Oberbegriff von Anspruch 1 definiert ist, sowie die Verwendung derselben für die Befestigung zwischen zwei oder mehreren Platten, wie in Anspruch 3 definiert ist.

Ein Niet als nicht abnehmbare, mechanische Verbindung, die dem Zusammenfügen von zwei oder mehreren Tafeln, insbesondere Metallblechen, dient, ist bekannt. Ein solcher wird auch zur Verbindung von Verbundwerkstoffen verwendet, zwischen denen keine Schweißverbindung hergestellt werden kann, sondern die mechanisch verbunden oder verklebt werden müssen. Die Nietenverbindung ist eine nicht abnehmbare Verbindung, d.h. die mechanische Kopplung ist endgültig und kann nur unter Zerstörung des Niets selbst aufgehoben werden.

Nietenverbindungen werden an Metallblechen verwendet, wo der Niet normalerweise nur Scherkräften ausgesetzt ist. Vor dem Setzen besteht der Niet aus einem Metallzylinder mit einem Kopf an einer oder an beiden Seiten. Der Niet wird in ein Loch eingeführt, das zuvor, beispielsweise mithilfe eines Bohrers, ausgebildet wurde, woraufhin das Ende ohne Kopf plastisch verformt wird, um den verformten Kopf zu bilden. Die Löcher, in die der Niet eingeführt wird, müssen einen kalibrierten Durchmesser aufweisen, der größer als der Durchmesser des nicht verformten Nietenschafts ist, der sich dann im Zuge der Ausbildung des verformten Kopfs bis zur vollständigen Ausfüllung des Lochs ausdehnen wird. Der freie Bereich muss einen Durchmesser aufweisen, der eineinhalb Mal dem Loch entspricht, um die richtige Ausbildung des verformten Kopfs zuzulassen. Das Loch muss in einem Winkel von 90° in den Tafeln ausgebildet sein.

Der Nachteil von Befestigungen mittels Nieten besteht in der Durchlässigkeit der Verbindung gegenüber Fluiden, wie etwa Wasser. Der verformte Kopf der Nieten gewährleistet keine Undurchlässigkeit der Verbindung, da es nicht möglich ist, die Bildung von Spalten zwischen dem verformten Kopf und der Öffnung zu verhindern, wodurch flüssige Stoffe zwischen den verformten Kopf und der Öffnung eindringen können und so auch die Zwischenräume zwischen den Elementen erreichen können. Es versteht sich, dass dies ein bedeutender Nachteil schon allein im Hinblick auf Probleme der Korrosion darstellt.

Aufgabe der vorliegenden Erfindung ist die Behebung der obengenannten Unzulänglichkeiten durch die in Anspruch 1 beschriebenen Bauelemente.

Vorteilhafte Weiterentwicklungen der undurchlässigen Nietenverbindung, die den Gegenstand der Erfindung bildet, sind in den abhängigen Ansprüchen aufgeführt.

Weitere Vorteile, die sich aus der vorliegenden Erfindung ergeben, sind hauptsächlich die folgenden:
- Die Gefahr eines Versagens der Befestigung zwischen den Elementen ist auf ein Minimum reduziert.
- Die Gefahr der Korrosion der Elemente und des Niets liegt praktisch bei null.

Nun wird die Erfindung unter Bezugnahme auf die beiliegenden Zeichnungen näher beschrieben, die schematisch bevorzugte Ausführungsformen zeigen, die jedoch ausschließlich zu Beispielzwecken und nicht zur Einschränkung angeführt sind, da technische Varianten oder Konstruktionsvarianten möglich sind, ohne den Schutzumfang der vorliegenden Erfindung zu verlassen.

### In den Zeichnungen:

Fig. 1 zeigt eine bevorzugte Ausführungsform des Gegenstands der Erfindung, nämlich einer undurchlässigen Nietenverbindung, im Querschnitt.

Fig. 2 zeigt eine Seitenansicht einer Komponente der Verbindung, nämlich des Niets, in ihrem Zustand vor der Verformung des Kopfs.

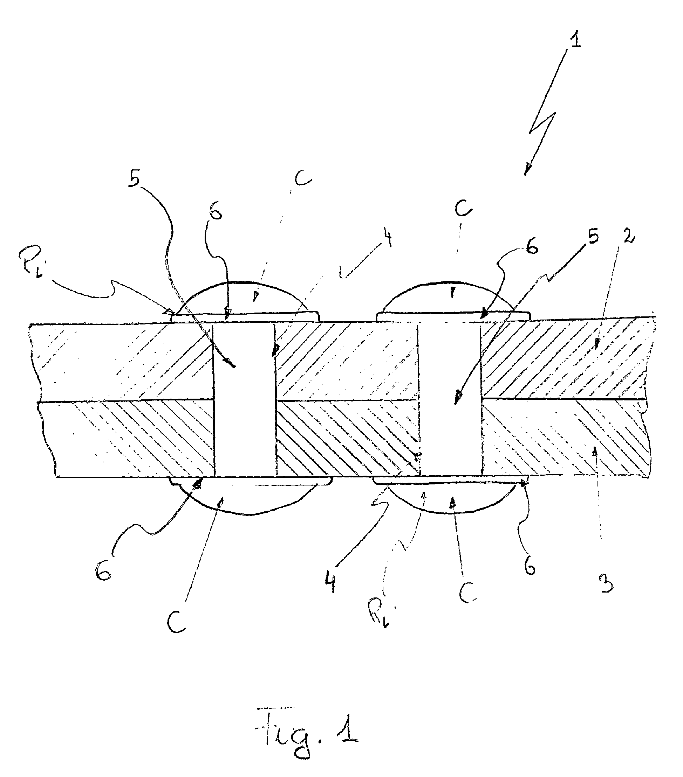

Mit Bezug auf Fig. 1 ist eine undurchlässige Nietenverbindung 1 zu sehen, in diesem Fall mit zwei Nieten Ri, wobei die Verbindung dazu geeignet ist, zwei Elemente 2, 3, bei denen es sich um zwei Platten 2, 3 oder zwei Tafeln 2, 3 oder einen beliebigen anderen Elementtyp handeln kann, durch Öffnungen 4 zu befestigen. Der Niet Ri weist einen verformten Kopf C - größer als die Öffnung - auf, und wie bereits erwähnt wurde, weist der Niet Ri - die Komponente der Erfindung - im nicht in die Verbindung eingeführten Zustand einen nicht verformten Kopf T auf, wobei im Zuge der Herstellung der Verbindung der Kopf durch eine Kraft plastisch verformt wird, die mittels eines geeigneten manuellen oder automatischen Werkzeugs angelegt wird, welches in Fig. 1 nicht dargestellt ist, da dieses nicht Teil der Erfindung ist.

Der Niet weist ferner einen Schaft 5 auf, der Maße aufweist, um in die Öffnung 4 eingeführt zu werden.

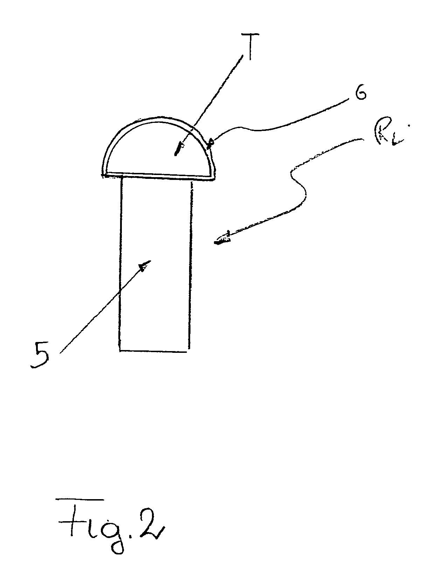

Zwischen dem verformten Kopf C des Niets Ri und der Öffnung ist eine Schicht aus einem pastenförmigen, undurchlässigen Material 6 angeordnet, wobei dieses Material Gummi, Silicon oder ein beliebiger anderer Typ eines pastenförmigen und undurchlässigen Materials sein kann. Vor dem Einführen in die Öffnung muss auf den Niet Ri diese Schicht aufgebracht werden, wie in Fig. 2 dargestellt ist.

Die Nieten, d.h. die Komponenten des Gegenstands der Erfindung, können in beliebigen Größen und Materialien bereitgestellt sein. Ein Merkmal des Niets Ri ist die Form des Kopfs, die flach, knopfförmig, halbkugelförmig sein oder andere Geometrien aufweisen kann. In den Ausführungsformen der Erfindung können die Nieten Blindnieten sein, der Zylinder des Niets kann hohl sein und kann einen Dorn enthalten, der herausgezogen wird, wodurch das Ende plastisch verformt wird, um einen Endabschnitt mit vergrößertem Durchmesser zu erhalten. Die Nieten Ri - die Komponenten - der Erfindung können mithilfe einer geeigneten Vorrichtung gesetzt werden.

## Patentansprüche

1. Undurchlässige Nietenverbindung (1) zum Befestigen von einem oder mehreren Elementen (2, 3) durch eine Öffnung (4), wobei die Nietenverbindung mindestens einen Niet (Ri) mit mindestens einem verformten Kopf (C), der größer als die Öffnung (4) ist, und mit einem Schaft (5), der in die Öffnung (4) eingeführt ist, sowie eine Schicht aus pastenförmigem, undurchlässigem Material (6) aufweist, **dadurch gekennzeichnet, dass** die Schicht aus pastenförmigem, undurchlässigem Material (6) derart zwischen dem verformten Kopf (5) und der Öffnung (4) angeordnet ist, dass der Verschluss der Öffnung (4) undurchlässig wird.

2. Undurchlässige Nietenverbindung (1) zum Befestigen von einem oder mehreren Elementen (2, 3) durch eine Öffnung nach Anspruch 1, wobei der pastenförmige Überzug (6) aus Gummi oder Silicon besteht.

3. Undurchlässige Nietenverbindung (1) zum Befestigen von einem oder mehreren Elementen (2, 3) durch eine Öffnung (4) nach einem der vorangegangenen Ansprüche zum Herbeiführen einer Befestigung zwischen zwei Platten (2, 3).
